(19) **Europäisches Patentamt**
**European Patent Office**
**Office européen des brevets**

(11) **EP 2 158 280 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **08758569.1**

(22) Anmeldetag: **16.05.2008**

(51) Int Cl.:
**C09D 175/04** (2006.01)   **C09C 1/00** (2006.01)
**C09C 1/64** (2006.01)   **C09D 5/36** (2006.01)

(86) Internationale Anmeldenummer:
**PCT/EP2008/003937**

(87) Internationale Veröffentlichungsnummer:
**WO 2008/141768 (27.11.2008 Gazette 2008/48)**

(54) **WÄSSRIGE, PIGMENTIERTE BESCHICHTUNGSMITTEL, VERFAHREN ZU DEREN HERSTELLUNG UND DEREN VERWENDUNG ZUR HERSTELLUNG VON MEHRSCHICHTLACKIERUNGEN**

AQUEOUS, PIGMENTED COATING AGENT, METHOD FOR THE PRODUCTION THEREOF, AND THE USE THEREOF FOR THE PRODUCTION OF MULTILAYER COATS OF PAINT

AGENTS DE REVÊTEMENT PIGMENTÉS AQUEUX, LEUR PROCÉDÉ DE PRODUCTION ET LEUR UTILISATION POUR LA PRODUCTION DE LAQUAGES MULTICOUCHES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.05.2007 DE 102007023539**

(43) Veröffentlichungstag der Anmeldung:
**03.03.2010 Patentblatt 2010/09**

(73) Patentinhaber: **BASF Coatings GmbH**
**48165 Münster (DE)**

(72) Erfinder:
• **LÖW, Norbert**
**91413 Neustadt/Aisch (DE)**
• **SCHWARTE, Stephan**
**48282 Emsdetten (DE)**
• **SONNTAG, Peter**
**48351 Everswinkel (DE)**

• **RUTTE, Melina**
**97204 Höchberg (DE)**
• **HUPP, Kurt**
**97270 Kist (DE)**

(74) Vertreter: **Leifert & Steffan**
**Patentanwälte**
**Burgplatz 21-22**
**40213 Düsseldorf (DE)**

(56) Entgegenhaltungen:
**EP-A- 0 826 745       WO-A-2007/057200**
**DE-A1- 19 948 004**

• **EUBERT ET AL: "PVD Aluminum Pigments: Superior Brilliance for Coatings & Graphic Arts" [Online] 6. Januar 2000 (2000-01-06), , XP002322107 Gefunden im Internet: URL:http: //www.pcimag.com/CDA/Articlenform ation/ coverstory/BNPCoverStoryl tem/ 0,1848,3507,00.html> [gefunden am 2005-03-23]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft wässrige, pigmentierte Beschichtungsmittel, deren Herstellung und Verwendung zur Herstellung von Mehrschichtlackierungen, insbesondere solchen mit einem besonders stark ausgeprägtes Hell-Dunkel-Verhalten (metallischer Flop, auch als Flop oder Flip-Flop bezeichnet).

Die seit langem bekannten wässrigen oder lösemittelhaltigen Beschichtungsstoffe, insbesondere die sogenannten Basislacke, und die hiermit hergestellten mehrschichtigen effektgebenden Lackierungen weisen gute anwendungstechnische Eigenschaften auf.

Die stetig wachsenden technischen und insbesondere ästhetischen Ansprüche des Marktes, vor allem der Automobilhersteller und ihrer Kunden, erfordern aber eine stetige Weiterentwicklung des bisher erreichten technischen und ästhetischen Niveaus. Modernes Karosserie-Design mit seinen ausgeprägten Rundungen harmoniert sehr gut mit Lackierungen mit starkem Flip-Flop-Effekt. Der Wunsch einen metallähnlichen Effekt zu erzeugen, lässt sich durch den Einsatz von sehr dünnen, im Nanometer-Bereich liegenden Aluminium-Blättchen realisieren wie sie beispielsweise in der EP 0826745 A2 beschrieben sind.

Insbesondere besteht ein Bedarf an neuen Beschichtungsmitteln, die es gestatten, Basislackierungen herzustellen, die ein besonders stark ausgeprägtes Hell-Dunkel-Verhalten aufweisen. Dabei sollen aber die durch die bekannten Basislacke und die hieraus hergestellten Basislackierungen erzielten Vorteile nicht verloren gehen, sondern zumindest in der gleichen, vorzugsweise einer stärkeren, Ausprägung erhalten bleiben.

Die entsprechenden effekt- und gegebenenfalls auch farbgebenden Basislackierungen sollen daher insbesondere einen guten Haze, d.h. keinen Glanzschleier, einen guten Verlauf sowie einen sehr guten optischen Gesamteindruck (Appearance) besitzen. Ferner sollen die Basislackierungen frei von Lackstörungen, Hell-Dunkel-Schattierungen (Wolken) und Stippen sein. Darüber hinaus sollen die resultierenden Beschichtungen keine optischen Fehlstellen aufweisen und eine zufriedenstellende Haftung zum Klarlack besitzen.

Außerdem sollen sich die Beschichtungsmittel durch eine gute Lagerstabilität auszeichnen, d.h. dass auch bei Lagerung der Beschichtungsmittel bei 40 °C (für 28 Tage) keine signifikante Verschlechterung der Eigenschaften sowohl der Beschichtungsmittel als auch der aus diesen gelagerten Beschichtungsmitteln hergestellten Beschichtungen auftritt. So soll keine Verschlechterung der rheologischen Eigenschaften der Beschichtungsmittel, insbesondere kein Viskositätsanstieg, und keine Stippenbildung und keine Verschlechterung des metallischen Flops auftreten.

Gewöhnliche Wasserbasislacke des Stands der Technik sind einfach herzustellen, lagerstabil und transportfähig. Sie erfüllen hinsichtlich Applikation, technologischen Eigenschaften (Haftung, Langzeitbewitterung), Lager- und Ringleitungsstabilität sowie Appearance die in der Automobillackierung üblichen Anforderungen.

Die EP 1 591 492 A1 beschreibt beispielsweise einen Metallpigmente enthaltenden Basislack, der wässrig oder lösemittelbasiert sein kann und welcher einen relativ hohen Anteil des Metallpigments - vorzugsweise 12 bis 20 Gew.-% bezogen auf den Gesamtbindemittelgehalt - enthält. Der Fokus der EP 1 591 492 A1 liegt jedoch darin möglichst feuchtigkeitsstabile Systeme bereitzustellen.

In der WO 2006/017197 A1 wird ein Verfahren zur Herstellung von Spezialeffektfackierungen offenbart, bei welchem relativ niedrige Anteile eines blättchenförmigen Metallpigments bei vergleichsweise hohen Bindemittelmengen und Festkörperanteilen zur Herstellung eines Effektlacks eingesetzt werden, wobei neben dem blättchenförmigen Metallpigment mindestens ein weiteres zusätzliches Spezialeffektpigment im Lack einzusetzen ist.

Das metallische Hell-Dunkel-Verhalten (Flip-Flop) von lösemittelbasierenden Basislacken wie sie beispielsweise für Felgenlackierungen eingesetzt werden, wird jedoch bei Verwendung von Effektpigmente enthaltenden Wasserbasislacken des Stands der Technik bisher bei weitem nicht erreicht.

Neben der Verwendung von PVD-Aluminium-Blättchen als Pigmente in der Metallic-Lack-Herstellung zur Erreichung eines Flip-Flop-Effekts ist auch die genaue Abstimmung des Gehalts der weiteren Komponenten im wässrigen Lacksystem von Bedeutung.

Wässrige Beschichtungsstoffe auf der Basis von Polyacrylaten und Polyestern als Bindemittel und Aminoplastharzen als Vernetzungsmittel, die ein durch PVD-Verfahren hergestelltes blättchenförmiges Aluminiumeffektpigment (z. B. Metalure® der Firma Eckart) enthalten, sind zwar bekannt, indes können sie noch nicht alle an sie gestellten Anforderungen erfüllen.

Der vorliegenden Erfindung lag somit die Aufgabe zugrunde neue, physikalisch, thermisch und physikalisch und thermisch härtbare, Metalleffektpigmente enthaltende Zusammensetzungen bereitzustellen, die einfach herzustellen sind und allen Anforderungen aktueller wässriger Fahrzeuglacke erfüllen. Darüber hinaus sollen sie einen ausgeprägten Flip-Flop-Effekt aufweisen.

Die Beschichtungsstoffe sollen sich insbesondere als Wasserbasislacke für die Herstellung effektgebender und farb- und effektgebender Basislackierungen von Mehrschichtlackierungen eignen. Dabei sollen sie ein vorzügliches Applikationsverhalten und einen hervorragenden Verlauf zeigen.

Die effektgebenden und farb- und effektgebenden Basislackierungen sollen auch in möglichst dünnen Schichten und vergleichsweise niedrigen Metalleffektpigmentkonzentrationen ein hohes Deckvermögen, eine hervorragende Zwischenschichthaftung, eine besonders hohe Schwitzwasserbeständigkeit, eine isotrope Pigmentverteilung, ein ganz besonders stark ausgeprägtes Hell-Dunkel-Verhalten (metallischer Flop) sowie eine sehr hohe metallische Brillanz und einen sehr hohen Glanz zeigen. Dabei sollen sie frei von Lackstörungen, wie Hell-Dunkel-Schattierungen (Wolken) und Stippen, sein. Insgesamt sollen sie eine möglichst chromähnliche Spiegelwirkung aufweisen und, sofern sie auch farbgebend sind, einen besonders eleganten, effektvollen Farbeffekt mit geringem Sparkle-Effekt (Glitzereffekt) haben.

Es wurde gefunden, dass die obigen Anforderungen erfüllt werden, indem nur physikalisch, thermisch und physikalisch oder nur thermisch härtbare wässrige Beschichtungsmittel-Zusammensetzungen zur Verfügung gestellt werden, die

A) mindestens ein Polyurethan, ausgewählt aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethanen, als Bindemittel und

B) mindestens ein durch PVD-Verfahren (Physical Vapour Deposition) hergestelltes blättchenförmiges Metalleffektpigment,

enthalten, wobei der Gehalt an B), bezogen auf den Gesamtbindemittelgehalt der Beschichtungsmittel-Zusammensetzung weniger als 10 Gew.-% beträgt und der Gesamtbindemittelgehalt bezogen auf die Beschichtungsmittel-Zusammensetzung weniger als 12 Gew.-% beträgt.

Die erfindungsgemäßen Beschichtungsmittel-Zusammensetzungen werden im Folgenden auch als »erfindungsgemäße Zusammensetzungen« bezeichnet.

Weiterer Gegenstand der vorliegenden Erfindung ist ein Verfahren zur Herstellung der erfindungsgemäßen Beschichtungsmittel-Zusammensetzungen, wobei die Beschichtungsmittel-Bestandteile vermischt werden und die resultierende Mischung homogenisiert wird. Dieses Verfahren wird im Folgenden als »erfindungsgemäßes Verfahren« bezeichnet.

Nicht zuletzt ist weiterer Gegenstand der Erfindung die Verwendung der erfindungsgemäßen Zusammensetzungen und der nach dem erfindungsgemäßen Verfahren hergestellten erfindungsgemäßen Zusammensetzungen als Beschichtungsstoff, insbesondere als Lack, vorzugsweise als Basislack. Diese Verwendung wird als »erfindungsgemäße Verwendung« bezeichnet.

Weitere Erfindungsgegenstände gehen aus der Beschreibung hervor.

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Zusammensetzungen, des erfindungsgemäßen Verfahrens und der erfindungsgemäßen Verwendung gelöst werden konnte.

Insbesondere war es überraschend, dass die erfindungsgemäße Zusammensetzungen auch bei stark wechselnden Temperaturen lagerstabil und transportfähig sind. Dabei kommt es auch nicht zu einer Gasentwicklung. Auch nach langer Scherung zeigten sie keine Absetzung von Metalleffektpigmenten oder anderen Bestandteilen.

Die Beschichtungsstoffe eignen sich hervorragend als Wasserbasislacke für die Herstellung effektgebender oder farb- und effektgebender Basislackierungen von Mehrschichtlackierungen. Dabei zeigten sie ein vorzügliches Applikationsverhalten und einen hervorragenden Verlauf.

Die effektgebenden und farb- und effektgebenden Basislackierungen weisen auch in vergleichsweise dünnen Schichten und vergleichsweise niedrigen Metalleffektpigmentkonzentrationen ein hohes Deckvermögen, eine hervorragende Zwischenschichthaftung, eine besonders hohe Schwitzwasserbeständigkeit, eine isotrope Pigmentverteilung, ein ganz besonders stark ausgeprägtes Hell-Dunkel-Verhalten (metallischer Flop), eine sehr hohe metallische Brillanz und einen sehr hohen Glanz auf. Dabei sind sie frei von Lackstörungen, wie Hell-Dunkel-Schattierungen (Wolken) und Stippen. Insgesamt zeigen sie sogar eine chromähnliche Spiegelwirkung und besitzen, sofern sie auch farbgebend sind, einen besonders eleganten, effektvollen Farbeffekt mit geringem Sparkle-Effekt (Glitzereffekt).

Die erfindungsgemäßen Zusammensetzungen enthalten mindestens ein Polyurethan (A) als Bindemittel.

Das Polyurethan (A) ist aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethanen, ausgewählt.

Zu den Eigenschaften »physikalisch härtbar«, »thermisch selbstvernetzend« und thermisch fremdvernetzend« sowie zu den stofflichen Voraussetzungen, die diesen Eigenschaften zu Grunde liegen wird auf die deutsche Patentanmeldung DE 100 10 416 A1, Seite 3, Zeilen 11 bis 30, und Seite 5, Zeilen 33 bis 41, und Seite 5, Zeile 47, bis Seite 8, Zeile 6, verwiesen. Das dort im Zusammenhang mit (Meth)Acrylat(co)polymerisaten Erläuterte gilt hier sinngemäß.

Vorzugsweise ist das Polyurethan (A) thermisch fremdvernetzend. Die thermische Vernetzung oder Härtung kann noch durch die physikalische Härtung des Polyurethans (A) unterstützt werden.

Das Polyurethan (A) kann auch mit olefinisch ungesättigten Verbindungen gepfropft sein. Zur Herstellung solcher gepfropften Polyurethane wird besonders bevorzugt als Pfropfbasis ein ungesättigtes, vorzugsweise olefinisch ungesättigtes, Polyurethan (A) verwendet. Ganz besonders bevorzugt enthält das olefinisch ungesättigte Polyurethan (A) terminale und laterale, insbesondere laterale, olefinisch ungesättigte Gruppen.

Ganz besonders bevorzugt ist das Polyurethan (A) ionisch, insbesondere anionisch, stabilisiert. Vor allem werden dazu Carboxylatgruppen verwendet.

**Beispiele geeigneter Polyurethane (A) sind aus den deutschen Patentanmeldungen**

- DE 40 09 858 A1, Spalte 6, Zeile 18, bis Spalte 10, Zeile 23,

- DE 44 37 535 A1, Seite 2, Zeile 27, bis Seite 6, Zeile 22,

- DE 199 14 896 A1, Spalte 4, Zeile 26, bis Spalte 11, Zeile 5,

- DE 100 43 405 C1, Spalte 5, Absatz [0030],

- DE 199 48 004 A1, Seite 3, Zeile 14, bis Seite 13, Zeile 48,

- DE 100 53 890 A1, Spalte 3, Absatz [0016], bis Spalte 18, Absatz [0123], oder

- DE 102 23 652 A1, Spalte 3, Absatz [0019], bis Spalte 16, Absatz [0101]

bekannt.

Der Gehalt an Polyurethan-Bindemittel (A) wird so eingestellt, dass in den erfindungsgemäßen Zusammensetzungen das Gewicht von durch PVD-Verfahren hergestellten blättchenförmigen Metalleffektpigmenten (B) bezogen auf das Gesamtbindemittelgewicht in der erfindungsgemäßen Zusammensetzung unter 10 Gew.-%, vorzugsweise 3 bis unter 10 Gew.-%, besonders bevorzugt 4 bis 9 Gew.-% und ganz besonders bevorzugt 6 bis 8 Gew.-% beträgt. Das Gesamtbindemittelgewicht der erfindungsgemäßen Zusammensetzung setzt sich hierbei aus dem Anteil an Polyurethanbindemittel(n) (A) und weiteren Bindemitteln, beispielsweise Polyesterharzen oder Polyacrylatharzen zusammen. Der Gesamtbindemittelgehalt der erfindungsgemäßen Zusammensetzung beträgt vorzugsweise weniger als 12 Gew.-%, besser weniger als 10 Gew.-%, besonders bevorzugt 5 bis 9 Gew.-% und ganz besonders bevorzugt 7 bis 9 Gew.-% bezogen auf das Gesamtgewicht der erfindungsgemäßen Zusammensetzung.

Vorzugsweise beträgt der Gehalt an Bindemittel (A) bezogen auf den Gesamtbindemittelgehalt wenigstens 20 Gew.-%, besonders bevorzugt mindestens 25 Gew.-% oder sogar über 30 Gew.-%.

Die erfindungsgemäßen Zusammensetzungen enthalten mindestens ein durch PVD-Verfahren (Physical Vapour Deposition) hergestelltes blättchenförmiges Metalleffektpigment (B). Vorzugsweise ist nur ein durch PVD-Verfahren hergestelltes blättchenförmiges Metalleffektpigment (B) enthalten.

Insbesondere handelt es sich bei dem blättchenförmigen Metalleffektpigment (B) um ein Aluminiumeffektpigment.

Bei den PVD-Verfahren handelt es sich um Vakuumbeschichtungsverfahren zur Herstellung dünner Schichten, bei denen das Metall, insbesondere Aluminium, durch rein physikalische Methoden in die Gasphase überführt wird, um dann auf dem Substrat abgeschieden zu werden (vgl. Römpp Online, Georg Thieme Verlag, 2004, »PVD-Verfahren«).

Vorzugsweise wird das Metall im Hochvakuum auf ein temporäres Substrat aufgedampft, wodurch eine Metallschicht (B') resultiert. Bevorzugt ist das temporäre Substrat eine Kunststofffolie. Besonders bevorzugt umfasst das temporäre Substrat eine Antihaftschicht oder Release-Schicht, auf der die Metallschicht (B') abgeschieden wird.

Anschließend wird die Metallschicht (B') durch Strippen, vorzugsweise mit einem unpolaren organischen Lösemittel, vom temporären Substrat entfernt, wonach die resultierenden Metallblättchen (B") geschert werden, was vorzugsweise durch Rühren der sie enthaltenden Dispersion erfolgt, wodurch das blättchenförmige Metalleffektpigment (B) resultiert.

Vorzugsweise weist das blättchenförmige Metalleffektpigment (B) eine Dicke von 20 bis 80 und insbesondere 30 bis 50 nm, auf.

Bevorzugt hat das blättchenförmige Metalleffektpigment (B) eine maximale Teilchengröße von 20 bis 50 und insbesondere 25 bis 45 $\mu$m.

Die blättchenförmigen Metalleffektpigmente (B), insbesondere die Aluminiumeffektpigmente (B) sind an sich bekannte Produkte und werden beispielsweise von der Firma Eckart unter den Marken Metalure®, Silvershine® oder Hydroshine® vertrieben.

Der Gehalt der erfindungsgemäßen Zusammensetzungen an den blättchenförmigen Metalleffektpigmenten (B) richtet sich wie oben beschrieben insbesondere nach dem Gesamtbindemittelgehalt. Auf die erfindungsgemäße Zusammensetzung als Ganze bezogen beträgt der Gehalt an (B) vorzugsweise 0,3 bis 0,9 Gew.-%, besonders bevorzugt 0,4 bis 0,7 Gew.-%.

Die erfindungsgemäßen Zusammensetzungen sind wässrig, d. h., dass sie Wasser enthalten, worin die vorstehend beschriebenen Bestandteile (A) und (B) dispergiert bzw emulgiert sind. Neben Wasser als Haupt-"Lösemittel" können jedoch wasserlackübliche Mengen an organischen Lösemitteln enthalten sein. Der Gehalt an organischen Lösemitteln sollte jedoch möglichst 18 Gew.-% bezogen auf das Gesamtgewicht der erfindungsgemäßen Zusammensetzung nicht überschreiten. Vorzugsweise liegt der Gehalt an organischen Lösemitteln bezogen auf das Gesamtgewicht der erfindungsgemäßen Zusammensetzung bei maximal 15 Gew.-%, besonders bevorzugt im Bereich von 7 bis 13 Gew.-% und ganz besonders bevorzugt bei 8 bis 12 Gew.-%.

Der Gesamtfestkörpergehalt aller nicht flüchtigen Bestandteile beträgt üblicherweise maximal 14 Gew.-%, besonders bevorzugt 8 bis 13 Gew.-% und ganz besonders bevorzugt 9 bis 12 Gew.-%, jeweils bezogen auf das Gesamtgewicht der erfindungsgemäßen Zusammensetzung. Der Gesamtfestkörpergehalt lässt sich beispielsweise durch zweistündiges Trocknen der Zusammensetzung bei 120 °C bestimmen.

Die erfindungsgemäßen Zusammensetzungen können noch mindestens eine weitere Komponente (C) enthalten. Im Falle der Verwendung fremdvernetzender Polyurethane (A) handelt es sich bei (C) um ein Vernetzungsmittel. Unter (C) fallen aber auch weitere gegebenenfalls neben dem Polyurethan-Bindemittel (A) enthaltende polyurethanfreie Bindemittel, wie beispielsweise Polyesterharze oder Poly(meth)acrylsäure- oder Poly(meth)acrylat-Harze.

Beispiele geeigneter Vernetzungsmittel (C) sind aus der deutschen Patentanmeldung DE 199 48 004 A1, Seite 14, Zeile 32, bis Seite 16, Zeile 14, bekannt. Vorzugsweise werden sie in den dort angegebenen Mengen verwendet.

Nicht zuletzt können die erfindungsgemäßen Zusammensetzungen noch mindestens ein übliches und bekanntes Lackadditiv in wirksamen Mengen als Zusatzstoff (C) enthalten. Beispiele geeigneter Lackadditive (C) sind aus der deutschen Patentanmeldung DE 199 48 004 A1, Seite 16, Zeile 15, bis Seite 17. Zeile 5, bekannt. Andere Zusatzstoffe (C) umfassen beispielsweise auch Farbstoffe oder Farbpigmente organischer oder anorganischer Art.

Komponente (C) kann auch von Komponente (B) verschiedene Effektpigmente enthalten. Da der Gehalt weiterer Effektpigmente zur Erzielung des Zwecks eines möglichst hohen metallischen Flops jedoch nicht notwendig ist, diesen sogar verhindern kann, sind solche erfindungsgemäßen Zusammensetzungen bevorzugt, die neben (B) keine weiteren Effektpigmente enthalten.

Die Herstellung der erfindungsgemäßen Zusammensetzungen erfolgt vorzugsweise mit Hilfe des erfindungsgemäßen Verfahrens. Dabei werden die vorstehend beschriebenen Bestandteile (A) und (B) sowie gegebenenfalls (C) in einem wässrigen Medium, insbesondere in Wasser, dispergiert, wonach man die resultierende Mischung homogenisiert. Methodisch gesehen, weist das erfindungsgemäße Verfahren keine Besonderheiten auf, sondern kann mit Hilfe der üblichen und bekannten Mischverfahren und Mischaggregate, wie Rührkesseln, Dissolvern, Rührwerksmühlen, Knetern, statischen Mischern oder Extrudern, durchgeführt werden.

Bei dem erfindungsgemäßen Verfahren wird das blättchenförmige Metalleffektpigment (B) vorzugsweise in der Form von Pigmentpasten eingesetzt. Insbesondere werden sie in der Form der in der deutschen Patentanmeldung DE 102 40 972 A1, Seite 3, Absatz [0019], bis Seite 5, Absatz [0031], beschriebenen Pigmentpasten eingesetzt, die mindestens ein blättchenförmiges Metalleffektpigment (B) an Stelle der dort beschriebenen Effektpigmente oder zusätzlich zu diesen enthalten.

Wegen der zahlreichen besonderen Vorteile der erfindungsgemäßen Zusammensetzungen und der mit Hilfe des erfindungsgemäßen Verfahrens hergestellten Zusammensetzungen, insbesondere der nach dem erfindungsgemäßen Verfahren hergestellten erfindungsgemäßen Zusammensetzungen, können diese zahlreichen Verwendungszwecken zugeführt werden.

Bevorzugt werden sie als Beschichtungsstoffe zur Herstellung einschichtiger und mehrschichtiger, insbesondere mehrschichtiger, effektgebender Beschichtungen eingesetzt. Besonders bevorzugt werden sie dabei als Wasserbasislacke zur Herstellung effektgebender sowie farb- und effektgebender Basislackierungen von Mehrschichtlackierungen, bevorzugt Mehrschichtlackierungen für Kraftfahrzeuge, insbesondere hochwertige PKW, verwendet.

Ganz besonders bevorzugt werden die Mehrschichtlackierungen durch Nass-in-nass-Verfahren hergestellt, bei denen man

(1) mindestens einen Wasserbasislack auf ein grundiertes oder ungrundiertes Substrat appliziert, wodurch mindestens eine Wasserbasislackschicht (1) resultiert,

(2) mindestens einen Klarlack auf die Wasserbasislackschicht (1) appliziert, wodurch mindestens eine Klarlackschicht (2) resultiert, und

(3) zumindest die Wasserbasislackschicht(en) (1) und die Klarlackschicht(en) (2) gemeinsam härtet, wodurch die Basislackierung (1) und die Klarlackierung (2) resultieren.

Beispiele solcher Nass-in-nass-Verfahren sind aus der deutschen Patentanmeldung DE 199 48 004 A1, Seite 17, Zeile 37, bis Seite 19, Zeile 22, bekannt.

In einer besonders bevorzugten Ausführungsform sind die Mehrschichtlackierungen erhältlich, indem das in obigem Schritt (1) eingesetzte grundierte Substrat ein mit einem Primer grundiertes Substrat ist, wobei der Primer in einem elektrostatischen Lackierverfahren (ESTA-Lackierung) aufgebracht wurde. Vorzugsweise werden zwei Primerschichten nacheinander mittels ESTA aufgebracht. Die Primerschicht bzw. Primerschichten besitzen bevorzugt jeweils eine Trockenschichtdicke von 10 bis 25 μm. Werden die vorzugsweise zwei Primerschichten aufgebracht so besitzt davon vorzugsweise jede eine Trockenschichtdicke von 10 bis 25 μm, besonders bevorzugt jede eine Trockenschichtdicke von 15 bis 20 μm. In dieser bevorzugten Ausführungsform der Nass-in-Nass-Mehrschichtlackierung wird anschließend die erfindungsgemäße PVD-Metalleffektpigment enthaltende Beschichtungsmittel-Zusammensetzung einmal, vorzugsweise zweimal in einer Trockenschichtdicke von jeweils 2 bis 8 μm, besonders bevorzugt 2 bis 6 μm und ganz besonders bevorzugt 3 bis 5 μm aufgebracht. Der in Schritt (2) der bevorzugten Ausführungsform aufgebrachte Klarlack wird vorzugsweise einschichtig, besonders bevorzugt mittels ESTA in einer Trockenschichtdicke von vorzugsweise 25 bis 50 μm, besonders bevorzugt 30 bis 45 μm und ganz besonders bevorzugt 35 bis 40 μm aufgebracht.

Eine so hergestellte bevorzugte erfindungsgemäße Mehrschichtlackierung besitzt dementsprechend ein oder zwei, vorzugsweise zwei Primerschichten mit einer Trockenschichtdicke von jeweils 10 bis 25 μm, besonders bevorzugt jeweils 15 bis 20 μm sowie ein oder zwei, vorzugsweise zwei auf der einzigen oder letzten Primerschicht aufgebrachte Lackschichten der erfindungsgemäßen Beschichtungsmittel-Zusammensetzung mit einer Trockenschichtdicke von je-weils 2 bis 8 μm, besonders bevorzugt jeweils 3 bis 5 μm und zuletzt eine Klarlackdeckschicht in einer Trockenschichtdicke von vorzugsweise 25 bis 50 μm, besonders bevorzugt 30 bis 45 μm und ganz besonders bevorzugt 35 bis 40 μm. Beim eingesetzten Klarlack handelt es sich besonders bevorzugt um einen 2-Komponenten-Klarlack (2K-Klarlack). Im Vergleich zu herkömmlichen Lackierungen besitzt diese besonders bevorzugte Mehrschichtlackierung eine deutlich geringere Schichtdicke bei nach wie vor hervorragenden Eigenschaften. Auch ist diese in weniger Arbeitsschritten erhältlich und hinsichtlich des Lackverbrauchs günstiger.

Vorzugsweise haben die resultierenden erfindungsgemäßen effektgebenden und farb- und effektgebenden Beschichtungen, insbesondere die erfindungsgemäßen Mehrschichtlackierungen, einen Flop-Index $FL_{X\text{-Rite}}$ = 24 und insbesondere = 26, jeweils berechnet nach der Formel der Firma X-Rite:

$$FL_{X\text{-Rite}} = 2{,}69\ (L^{*}_{15^{\circ}} - L^{*}_{110^{\circ}})^{1,11}/(L^{*}_{45^{\circ}})^{0,86}.$$

Überraschenderweise zeigen die betreffenden erfindungsgemäßen farb- und effektgebenden Beschichtungen, insbesondere die erfindungsgemäßen Mehrschichtlackierungen im Vergleich zu lösemittelbasierten Lackierungen keine Hell-Dunkel-Schattierungen (Wolken) mehr.

Insgesamt weisen die erfindungsgemäßen effektgebenden Beschichtungen (Wasserbasislacke V1 und V2), insbesondere die erfindungsgemäßen Mehrschichtlackierungen, ein hervorragendes anwendungstechnisches Eigenschaftsprofil auf, das hinsichtlich der Mechanik, Optik, Korrosionsbeständigkeit, Zwischenschichthaftung und Substrathaftung hervorragend ausgewogen ist. Hervorzuheben ist dabei der hervorragende optische Gesamteindruck (Appearance) und das besonders stark ausgeprägte, vom Betrachtungswinkel abhängige Hell-Dunkel-Verhalten (metallischer Flop), der auf die von Lackstörungen freie erfindungsgemäße Basislackierung zurückzuführen ist. Der metallische Flop kann so ausgeprägt sein, dass eine chromähnliche Spiegelwirkung erzielt wird. Außerdem zeigen die farb- und effektgebenden erfindungsgemäßen Beschichtungen, insbesondere die erfindungsgemäßen Mehrschichtlackierungen, ästhetisch besonders ansprechende, elegante, effektvolle Farbeffekte mit geringem Sparkle-Effekt (Glitzereffekt).

Besonders überraschend war es, dass bei einem sehr niedrigen Anteil des durch ein PVD-Verfahren hergestellten blättchenförmigen Metalleffektpigments bezogen auf den Gesamtbindemittelanteil der erfindungsgemäßen Zusammensetzung Beschichtungsmittel erhalten werden, die einen metallischen Flop aufweisen, der dem von lösemittelbasierten Systemen im Wesentlichen gleichkommt ohne dass die Lackierungen dessen Nachteile wie die beispielsweise Wolkenbildung aufweisen. Ebenso überraschend was es, dass besagter Erfolg in den erfindungsgemäßen Zusammensetzungen auftritt, obgleich diese nur einen sehr geringen absoluten Gesamtbindemittelanteil von unter 12 Gew.-%, üblicherweise unter 10 Gew.-% bezogen auf das Gesamtgewicht der Zusammensetzung aufweisen und einen sehr geringen Gesamtfestkörperanteil besitzen.

Beste Ergebnisse werden erhalten, wenn für die erfindungsgemäße Zusammensetzung die bevorzugten und/ oder besonders bevorzugten weiter oben angegebenen Bereiche betreffend den Gesamtbindemittelgehalt, Gehalt an Polyurethan-Bindemittel (A), Gesamtfestkörpergehalt, Gehalt an einem durch ein PVD-Verfahren hergestellten blättchenförmigen Metallpigment (B), Lösemittelgehalt und insbesondere das Gewichtsverhältnis von (B) zum Gesamtbindemittelgehalt eingehalten werden.

Eine typische ganz besonders bevorzugte erfindungsgemäße Zusammensetzung enthält daher beispielsweise:

- durch ein PVD-Verfahren hergestellte blättchenförmige Metalleffektpigmente (B) in einem Anteil von 6 bis 8 Gew.-% bezogen auf das Gesamtbindemittelgewicht und/oder 0,4 bis 0,7 Gew.-% bezogen auf das Gesamtgewicht der erfindungsgemäßen Zusammensetzung
- Bindemittel in einem Gesamtgehalt von 7 bis 9 Gew.-% bezogen auf das Gesamtgewicht der erfindungsgemäßen Zusammensetzung und erfüllt gegebenenfalls eines oder mehrere der folgenden Kriterien wie
- einen Gehalt von mindestens 30 Gew.-% an Polyurethan-Bindemitteln (B) bezogen auf den Gesamtbindemittelgehalt
- einen Gesamtfestkörpergehalt von 9 bis 12 Gew.-% (nichtflüchtige Bestandteile, 120 °C, 2 h) und
- einen Gehalt an organischen Lösungsmitteln von 8 bis 12 Gew.-% bezogen auf das Gesamtgewicht der Zusammensetzung.

Jeder der in der typischen besonders bevorzugten Zusammensetzung genannten Bereiche kann selbstverständlich innerhalb der erfindungsgemäßen Grenzen erweitert werden. So lässt sich jeder einzelne der genannten Bereiche durch einen weiteren erfindungsgemäßen in der Beschreibung genannten Bereich ersetzen oder unter Einbezug einer der genannten Ober- oder Untergrenze einschränken, ohne dass hierdurch das Wesen der Erfindung verändert wird. Beste Ergebnisse, insbesondere hinsichtlich des metallischen Flops der Beschichtungen sind jedoch zu erwarten, wenn die besonders bevorzugten Bereiche eingehalten werden.

Als Vergleichssysteme wurden acht unterschiedliche Basislacke verwendet, wobei die Wasserbasislacke V1 und V2 erfindungsgemäß sind und die weiteren Wasserbasislacke V3 bis V8 als Vergleich dienen. Die Wasserbasislacke V1 bis V3 besitzen einen relativ niedrigen Gesamtfestkörpergehalt von unter 11 Gew.-%, wobei der Gehalt an Pigment (B) (Hydroshine WS3001 der Firma Eckart) bezogen auf das Gesamtbindemittelgewicht 4 Gew.-% (V1), 7 Gew.-% (V2) bzw. 10 Gew.-% (V3) beträgt. Die als Vergleich dienenden Wasserbasislacke V4 bis V6 besitzen einen Festkörpergehalt von mehr als 14 Gew.-%, wobei der Gehalt an Pigment (B) (Hydroshine WS3001 der Firma Eckart) bezogen auf das Gesamtbindemittelgewicht 4 Gew.-% (V4), 7 Gew.-% (V5) bzw. 10 Gew.-% (V6) beträgt. Der Vergleichs-Wasserbasislack V7 wurde unter Verwendung von Silberdollar Aluminium-Pigmenten der Type Hydrolux der Firma Eckart mit einem Festkörpergehalt von über 18 Gew.-% und einem Pigmentgehalt von 2,7% hergestellt. Der Vergleichslack V8 ist auf Lösemittelbasis unter Verwendung von PVD-Alu-Pigment der Type Metalure L55700 der Firma Eckart mit einem Festkörpergehalt von unter 10 Gew.-% und einem exakt eingestellten Pigmentgehalt von 8% Aluminium bezogen auf Gesamtbindemittel hergestellt worden.

**Herstellung der Lacksysteme V1 bis V8**

Wasserbasislack V1:

In einem Rührgefäß wurden 26 Gewichtsteile eines Verdickungsmittels (Paste eines Natrium-Magnesium-Schichtsilikats, Laponite® RD, 3-prozentig in Wasser) vorgelegt. Dazu wurden 10 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 1,0 Gewichtsteile des handelsüblichen Netzmittels Surfynol® 100 (50-prozentig in Butylglykol) hinzugegeben. Anschließend wurden eine Mischung aus 1,7 Gewichtsteilen eines handelsüblichen wasserverdünnbaren Melaminformaldehydharzes (Cymel® 327) und 2,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 1,0 Gewichtsteile Butylglykol, 1,0 Gewichtsteile des handelsüblichen Netzmittels Surfynol® 100 (50-prozentig in Butylglykol) und 0,1 Gewichtsteile Dimethylethanolamin (10-prozentig in deionisiertem Wasser) unter Rühren hinzugegeben. Die resultierende Mischung wurde mit 1,6 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 1,5 Gewichtsteile des handelsüblichen Netzmittels Surfynol® 100 (50-prozentig in Butylglykol), 0,2 Gewichtsteile des handeslüblichen Radikalfängers Tinuvin 123, 0,7 Gewichtsteile einer 50-prozentigen Lösung des handelsüblichen Polyurethanverdickers Nopco® DSX 1550 in Butylglykol und 0,3 Gewichtsteile des handelsüblichen, nicht assoziativ wirkenden Verdickers Viscalex® HV30 (Methacrylatcopolymerisat auf der Basis von (C1-C6)-Alkyl(meth)acrylat und (Meth)Acrylsäure gemäß dem deutschen Patent DE 100 43 405 C1, Spalte 11, Absatz [0075]) sowie portionsweise 43,3 Gewichtsteile Wasser hinzugegeben. Die resultierende Mischung wurde mit einer Paste aus 3,7 Gewichtsteilen eines blättchenförmigen Aluminiumeffektpigments (B), hergestellt nach einem PVD-Verfahren (Alu-Hydroshine® WS3001 der Firma Eckart) und 3,7 Gewichtsteilen einer Mischung gemäß der deutschen Patentanmeldung DE 102 40 972 A1, Seite 7, Absatz [0053], aus Viscalexe® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V1 resultierte.

Für die Applikation wurde der Wasserbasislack V1 mit einer zehnprozentigen wässrigen Dimethylethanolamin-Lösung und deionisiertem Wasser auf einen pH-Wert von 7,8 bis 8,2 und eine Applikationsviskosität von 30-40 mPas bei 23°C und einer Scherung von 1.000 s$^{-1}$ eingestellt.

Wasserbasislack V2:

In einem Rührgefäß wurden 26 Gewichtsteile eines Verdickungsmittels (Paste eines Natrium-Magnesium-Schichtsilikats, Laponite® RD, 3-prozentig in Wasser) vorgelegt. Dazu wurden 10 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 1,0 Gewichtsteile des handelsüblichen Netzmittels Surfynol® 100 (50-prozentig in Butylglykol) hinzugegeben. Anschließend wurden eine Mischung aus 1,7 Gewichtsteilen eines handelsüblichen wasserverdünnbaren Melaminformaldehydharzes (Cymel® 327) und 2,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 1,0 Gewichtsteile Butylglykol, 1,0 Gewichtsteile des handelsüblichen Netzmittels Surfynol® 100 (50-prozentig in Butylglykol) und 0,1 Gewichtsteile Dimethylethanolamin (10-prozentig in deionisiertem Wasser) unter Rühren hinzugegeben. Die resultierende Mischung wurde mit 1,6 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 1,5 Gewichtsteile des handelsüblichen Netzmittels Surfynol® 100 (50-prozentig in Butylglykol), 0,2 Gewichtsteile des handeslüblichen Radikalfängers Tinuvin 123, 0,7 Gewichtsteile einer 50-prozentigen Lösung des handelsüblichen Polyurethanverdickers Nopco® DSX 1550 in Butylglykol und 0,3 Gewichtsteile des handelsüblichen, nicht assoziativ wirkenden Verdickers Viscalex® HV30 (Methacrylatcopolymerisat auf der Basis von (C1-C6)-Alkyl(meth)acrylat und (Meth)Acrylsäure gemäß dem deutschen Patent DE 100 43 405 C1, Spalte 11, Absatz [0075]) sowie portionsweise 39,5 Gewichtsteile Wasser hinzugegeben. Die resultierende Mischung wurde mit einer Paste aus 5,6 Gewichtsteilen eines blättchenförmigen Aluminiumeffektpigments (B), hergestellt nach einem PVD-Verfahren (Alu-Hydroshine® WS3001 der Firma Eckart) und 5,6 Gewichtsteilen einer Mischung gemäß der deutschen Patentanmeldung DE 102 40 972 A1, Seite 7, Absatz [0053], aus Viscalex® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V2 resultierte.

Für die Applikation wurde der Wasserbasislack V2 mit einer zehnprozentigen wässrigen Dimethylethanolamin-Lösung und deionisiertem Wasser auf einen pH-Wert von 7,8 bis 8,2 und eine Applikationsviskosität von 30-40 mPas bei 23°C und einer Scherung von 1.000 s$^{-1}$ eingestellt.

Wasserbasislack V3 (Vergleichsversuch):

In einem Rührgefäß wurden 26 Gewichtsteile eines Verdickungsmittels (Paste eines Natrium-Magnesium-Schichtsilikats, Laponite® RD, 3-prozentig in Wasser) vorgelegt. Dazu wurden 10 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 1,0 Gewichtsteile des handelsüblichen Netzmittels Surfynol® 100 (50-prozentig in Butylglykol) hinzugegeben. Anschließend wurden eine Mischung aus 1,7 Gewichtsteilen eines handelsüblichen wasserverdünnbaren Melaminformaldehydharzes (Cymel® 327) und 2,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 1,0 Gewichtsteile Butylglykol, 1,0 Gewichtsteile des handelsüblichen Netzmittels Surfynol® 100 (50-prozentig in Butylglykol) und 0,1 Gewichtsteile Dimethylethanolamin (10-prozentig in deionisiertem Wasser) unter Rühren hinzugegeben. Die resultierende Mischung wurde mit 1,6 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 1,5 Gewichtsteile des handelsüblichen Netzmittels Surfynol® 100 (50-prozentig in Butylglykol), 0,2 Gewichtsteile des handeslüblichen Radikalfängers Tinuvin 123, 0,7 Gewichtsteile einer 50-prozentigen Lösung des handelsüblichen Polyurethanverdickers Nopco® DSX 1550 in Butylglykol und 0,3 Gewichtsteile des handelsüblichen, nicht assoziativ wirkenden Verdickers Viscalex® HV30 (Methacrylatcopolymerisat auf der Basis von (C1-C6)-Alkyl(meth)acrylat und (Meth)Acrylsäure gemäß dem deutschen Patent DE 100 43 405 C1, Spalte 11, Absatz [0075]) sowie portionsweise 33,7 Gewichtsteile Wasser hinzugegeben. Die resultierende Mischung wurde mit einer Paste aus 8,5 Gewichtsteilen eines blättchenförmigen Aluminiumeffektpigments (B), hergestellt nach einem PVD-Verfahren (Alu-Hydroshine® WS3001 der Firma Eckart) und 8,5 Gewichtsteilen einer Mischung gemäß der deutschen Patentanmeldung DE 102 40 972 A1, Seite 7, Absatz [0053], aus Viscalex® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V3 resultierte.

Für die Applikation wurde der Wasserbasislack V3 mit einer zehnprozentigen wässrigen Dimethylethanolamin-Lösung und deionisiertem Wasser auf einen pH-Wert von 7,8 bis 8,2 und eine Applikationsviskosität von 30-40 mPas bei 23°C und einer Scherung von 1.000 s$^{-1}$ eingestellt.

Wasserbasislack V4 (Vergleichsversuch):

In einem Rührgefäß wurden 24 Gewichtsteile eines Verdickungsmittels (Paste eines Natrium-Magnesium-Schichtsilikats, Laponite® RD, 3-prozentig in Wasser) vorgelegt. Dazu wurden 19 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 0,9 Gewichtsteile des handelsüblichen Netzmittels Surfynol® 100 (50-prozentig in Butylglykol) hinzugegeben. Anschließend wurden eine Mischung aus 3,2 Gewichtsteilen eines handelsüblichen wasserverdünnbaren Melaminformaldehydharzes (Cymel® 327) und 1,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 2,0 Gewichtsteile Butylglykol. 0,9 Gewichtsteile des handelsüblichen Netzmittels Surfynol® 100 (50-prozentig in Butylglykol) und 0,2 Gewichtsteile Dimethylethanolamin (10-prozentig in deionisiertem Wasser) unter Rühren hinzugegeben. Die resultierende Mischung wurde mit 3,0 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 0,9 Gewichtsteile des handelsüblichen Netzmittels Surfynol® 100 (50-prozentig in Butylglykol), 1,2 Gewichtsteile einer 50-prozentigen Lösung des handelsüblichen Polyurethanverdickers Nopco® DSX 1550 in Butylglykol und 0,5 Gewichtsteile des handelsüblichen, nicht assoziativ wirkenden Verdickers Viscalex® HV30 (Methacrylatcopolymerisat auf der Basis von (C1-C6)-Alkyl(meth)acrytat und (Meth)Acrylsäure gemäß dem deutschen Patent DE 100 43 405 C1, Spalte 11, Absatz [0075]) sowie portionsweise 29,0 Gewichtsteile Wasser hinzugegeben. Die resultierende Mischung wurde mit einer Paste aus 5,0 Gewichtsteilen eines blättchenförmigen Aluminiumeffektpigments (B), hergestellt nach einem PVD-Verfahren (Alu-Hydroshine® WS3001 der Firma Eckart) und 5,0 Gewichtsteilen einer Mischung gemäß der deutschen Patentanmeldung DE 102 40 972 A1, Seite 7, Absatz [0053], aus Viscalex® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V4 resultierte.

Für die Applikation wurde der Wasserbasislack V4 mit einer zehnprozentigen wässrigen Dimethylethanolamin-Lösung und deionisiertem Wasser auf einen pH-Wert von 7,8 bis 8,2 und eine Applikationsviskosität von 40-50 mPas bei 23°C und einer Scherung von 1.000 s$^{-1}$ eingestellt.

Wasserbasislack V5 (Vergleichsversuch):

In einem Rührgefäß wurden 24 Gewichtsteile eines Verdickungsmittels (Paste eines Natrium-Magnesium-Schichtsilikats, Laponite® RD, 3-prozentig in Wasser) vorgelegt. Dazu wurden 19 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 0,9 Gewichtsteile des handelsüblichen Netzmittels Surfynol® 100 (50-prozentig in Butylglykol) hinzugegeben. Anschließend wurden eine Mischung aus 3,2 Gewichtsteilen eines handelsüblichen wasserverdünnbaren Melaminformaldehydharzes (Cymel® 327) und 1,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 2,0 Gewichtsteile Butylglykol, 0,9 Gewichtsteile des handelsüblichen Netzmittels Surfynol® 100 (50-prozentig in Butylglykol) und 0,2 Gewichtsteile Dimethylethanolamin (10-prozentig in deionisiertem Wasser) unter Rühren hinzugegeben. Die resultierende Mischung wurde mit 3,0 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylate«, versetzt. Zur resultierenden Mischung wurden unter Rühren 0,9 Gewichtsteile des handelsüblichen Netzmittels Surfynol® 100 (50-prozentig in Butylglykol), 1,2 Gewichtsteile einer 50-prozentigen Lösung des handelsüblichen Polyurethanverdickers Nopco® DSX 1550 in Butylglykol und 0,5 Gewichtsteile des handelsüblichen, nicht assoziativ wirkenden Verdickers Viscalex® HV30 (Methacrylatcopolymerisat auf der Basis von (C1-C6)-Alkyl(meth)acrylat und (Meth)Acrylsäure gemäß dem deutschen Patent DE 100 43 405 C1, Spalte 11, Absatz [0075]) sowie portionsweise 21,0 Gewichtsteile Wasser hinzugegeben. Die resultierende Mischung wurde mit einer Paste aus 9,0 Gewichtsteilen eines blättchenförmigen Aluminiumeffektpigments (B), hergestellt nach einem PVD-Verfahren (Alu-Hydroshine® WS3001 der Firma Eckart) und 9,0 Gewichtsteilen einer Mischung gemäß der deutschen Patentanmeldung DE 102 40 972 A1, Seite 7, Absatz [0053], aus Viscalex® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V5 resultierte.

Für die Applikation wurde der Wasserbasislack V5 mit einer zehnprozentigen wässrigen Dimethylethanolamin-Lösung und deionisiertem Wasser auf einen pH-Wert von 7,8 bis 8,2 und eine Applikationsviskosität von 40-50 mPas bei 23°C und einer Scherung von 1.000 $s^{-1}$ eingestellt.

Wasserbasislack V6 (Vergleichsversuchl:

In einem Rührgefäß wurden 24 Gewichtsteile eines Verdickungsmittels (Paste eines Natrium-Magnesium-Schichtsilikats, Laponite® RD, 3-prozentig in Wasser) vorgelegt. Dazu wurden 19 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion«, unter Rühren hinzugegeben. Zur resultierenden Mischung wurden unter Rühren 0,9 Gewichtsteile des handelsüblichen Netzmittels Surfynol® 100 (50-prozentig in Butylglykol) hinzugegeben. Anschließend wurden eine Mischung aus 3,2 Gewichtsteilen eines handelsüblichen wasserverdünnbaren Melaminformaldehydharzes (Cymel® 327) und 1,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 2,0 Gewichtsteile Butylglykol, 0,9 Gewichtsteile des handelsüblichen Netzmittels Surfynol® 100 (50-prozentig in Butylglykol) und 0,2 Gewichtsteile Dimethylethanolamin (10-prozentig in deionisiertem Wasser) unter Rühren hinzugegeben. Die resultierende Mischung wurde mit 3,0 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 0,9 Gewichtsteile des handelsüblichen Netzmittels Surfynol® 100 (50-prozentig in Butylglykol), 1,2 Gewichtsteile einer 50-prozentigen Lösung des handelsüblichen Polyurethanverdickers Nopco® DSX 1550 in Butylglykol und 0,5 Gewichtsteile des handelsüblichen, nicht assoziativ wirkenden Verdickers Viscalex® HV30 (Methacrylatcopolymerisat auf der Basis von (C1-C6)-Alkyl(meth)acrylat und (Meth)Acrylsäure gemäß dem deutschen Patent DE 100 43 405 C1, Spalte 11, Absatz [0075]) sowie portionsweise 21,0 Gewichtsteile Wasser hinzugegeben. Die resultierende Mischung wurde mit einer Paste aus 13,0 Gewichtsteilen eines blättchenförmigen Aluminiumeffektpigments (B), hergestellt nach einem PVD-Verfahren (Alu-Hydroshine® WS3001 der Firma Eckart) und 13,0 Gewichtsteilen einer Mischung gemäß der deutschen Patentanmeldung DE 102 40 972 A1, Seite 7, Absatz [0053], aus Viscale® HV30, einem organischen Amin, Surfynol® 100, dem nicht-ionischen Tensid (Niotensid) Hydropalat® 3037 der Firma Cognis und Wasser versetzt.

Die resultierende Mischung wurde homogenisiert, wodurch der Wasserbasislack V6 resultierte.

Für die Applikation wurde der Wasserbasislack V6 mit einer zehnprozentigen wässrigen Dimethylethanolamin-Lösung und deionisiertem Wasser auf einen pH-Wert von 7,8 bis 8,2 und eine Applikationsviskosität von 40-50 mPas bei 23°C und einer Scherung von 1.000 $s^{-1}$ eingestellt.

Wasserbasislack V7 (Vergleichsversuch):

In einem Rührgefäß wurden 23,2 Gewichtsteile Laponite® RD vorgelegt. Dazu wurden 20,5 Gewichtsteile der Polyurethandispersion gemäß der deutschen Patentanmeldung DE 40 09 858 A1, Spalte 16, Zeilen 10 bis 35, »C. Herstellung einer wässrigen Polyurethanharzdispersion« unter Rühren hinzugegeben. Anschließend wurden eine Mischung aus 3,7 Gewichtsteilen Cymel® 327 und 1,0 Gewichtsteilen einer wässrigen Polyesterharzdispersion gemäß der deutschen Patentanmeldung DE 40 09 858 A1, Spalte 16, Zeile 37 bis 59, »D. Herstellung einer wässrigen Polyesterharzdispersion«, 2,0 Gewichtsteile Butylglykol und 0,2 Gewichtsteile Dimethylethanolamin (10-prozentig in deionisiertem Wasser) unter Rühren hinzugegeben. Die resultierende Mischung wurde mit 3,7 Gewichtsteilen des polyurethanmodifizierten Polyacrylatharzes gemäß der deutschen Patentanmeldung DE 44 37 535 A1, Seite 7, Zeile 55, bis Seite 8, Zeile 23, »D. Herstellung des erfindungsgemäßen polyurethanmodifizierten Polyacrylates«, versetzt. Zur resultierenden Mischung wurden unter Rühren 1,0 Gewichtsteile Polypropylenglykol (zahlenmittleres Molekulargewicht: 900 Dalton), 2,3 Gewichtsteile iso-Butanol, 3,0 Gewichtsteile 2-Ethylhexanol, 2,1 Gewichtsteile n-Propoxypropanol, 1,6 Gewichtsteile Butoxypropanol, 1,0 Gewichtsteile eines modifizierten Polydimethylsiloxans, 0,66 Gewichtsteile der 50-prozentigen Lösung des handelsüblichen Polyurethanverdickers Nopco® DSX1550 in Butylglykol und 0,65 Gewichtsteile des handelsüblichen Verdickers Viscalex® HV 30sowie portionsweise 20 Gewichtsteile Wasser hinzugegeben. Die resultierende Mischung wurde mit einer Aluminiumeffektpigmentpaste aus 3,6 Gewichtsteilen Alu-Hydrolux® 612 der Firma Eckart, 0,5 Gewichtsteilen Alu-Hydrolux® 2154 der Firma Eckart, 3,4 Gewichtsteilen der Polyesterharzdispersion gemäß der deutschen Patentanmeldung DE 40 09 858 A1, Spalte 16, Zeile 37 bis 59, »D. Herstellung einer wässrigen Polyesterharzdispersion«, 4,0 Gewichtsteilen Butylglykol und 0,5 Gewichtsteilen Dimethylethanolamin (10-prozentig in deionisiertem Wasser) unter Rühren versetzt.

Die resultierende Mischung wurde homogenisiert, wodurch der Wasserbasislack V7 resultierte.

Der Wasserbasislack V7 wurde mit einer zehnprozentigen wässrigen Dimethylethanolamin-Lösung und deionisiertem Wasser auf einen pH-Wert von 7,8 bis 8,2 und eine Applikationsviskosität von 90-100 mPas bei 23°C und einer Scherung von 1.000 s$^{-1}$ eingestellt.

Lösemittellack V8 (Vergleichsversuch):

In einem Rührgefäß wurden 22,2 Gewichtsteile einer CAB-Lösung vorgelegt. Dazu wurden 2,8 Gewichtsteile einer Polyesterharzdispersion unter Rühren hinzugegeben. Zur resultierenden Mischung wurden unter Rühren 2,8 Gewichtsteile eines handelsüblichen Melaminformaldehydharzes (Maprenal® MF900) und 6,2 Gewichtsteilen eines blättchenförmigen Aluminiumeffektpigments (B), hergestellt nach einem PVD-Verfahren (Alu-Metalure® L55700 der Firma Eckart) hinzugegeben. Anschließend wurden unter Rühren 8,3 Gewichtsteile Butylglykolacetat, 2,6 Gewichtsteile Butylacetat, 11,5 Gewichtsteile Solventnaphtha, 10,6 Gewichtsteile Diacetonalkohol und 33 Gewichtsteile Methoxypropylacetat hinzugegeben.

Die resultierende Mischung wurde homogenisiert, wodurch der Lösemittelbasislack V8 resultierte.

Für die Applikation wurde der Lösemittelbasislack V8 mit Butylacetat auf eine Applikationsviskosität von 20-30sec (Ford Cup 4 bei 23°C) eingestellt.

**Der Herstellung der Mehrschichtlackierungen 1 bis 8**

Für die Herstellung der Mehrschichtlackierung 1 bis 8 wurden Basislacke V1 bis V8 verwendet.

Mehrschichtlackierung 1:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V1 in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar, Homluftmenge: 380 Nl/min; Hornluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 1 resultierte.

Mehrschichtlackierung 2:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V2 in jeweils zwei Spritzgängen appliziert. Der erste Auftrag erfolgte pneumatisch (Abstand: 0,5 m; Ausflussmenge Lack: 300 Nl/min, Zerstäuberluftmenge: 320 Nl/min, Zerstäuberiuftdruck: 4,8 bar; Homluftmenge: 380 Nl/min; Homluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klartakkierungen wurde ein handelsüblicher kratzfester Zweikomponentenklarlack der Firma PPG appliziert und während 30 Minuten bei 140°C eingebrannt, wodurch die Mehrschichtlackierung 2 resultierte.

Mehrschichtlackierung 3:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V3 in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdrurck: 4,8 bar; Homluftmenge: 380 Nl/min; Homluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 3 resultierte.

Mehrschichtlackierung 4:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V4 in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar, Hornluftmenge: 380 Nl/min; Homluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 4 resultierte.

Mehrschichtlackierung 5:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V5 in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar; Homluftmenge: 380 Nl/min; Homluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 5 resultierte.

Mehrschichtlackierung 6:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Nach dem Abkühlen der Karosseriebleche auf 20°C wurde der Wasserbasislack V6 in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar; Homluftmenge: 380 Nl/min; Hornluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 6 resultierte.

Mehrschichtlacklerung 7:

Auf Karosseriebleche der Abmessung 30 mal 70 cm, die mit einer üblichen und bekannten, kathodisch abgeschiedenen und eingebrannten Elektrotauchlackierung beschichtet worden waren, wurde ein handelsüblicher Füller der Firma BASF Coatings AG appliziert, wonach die resultierenden Füllerschichten während 5 Minuten bei 20°C und einer relativen Luftfeuchtigkeit von 65% abgelüftet und in einem Umluftofen während 30 Minuten bei 140°C eingebrannt wurden. Nach dem Abkühlen der Karosseriebleche auf 20°C wurde der Wasserbasislack V7 in jeweils zwei Spritzgängen appliziert. Der erste Auftrag erfolgte mittels ESTA (Glockendrehzahl: 45.000 min$^{-1}$; Lenkluft ESTA: 120 Nl/min; Spannung: 65 kV; Abstand: 0,25 m; Ausflussmenge Lack: 170 ml/min), entsprechend einer Trockenschichtdicke von 8 bis 10 $\mu$m. Der zweite Auftrag erfolgte pneumatisch (Abstand: 0,32 m; Ausflussmenge Lack: 540 Nl/min; Zerstäuberluftmenge: 300 Nl/min; Zerstäuberluftdruck: 4,8 bar; Hornluftmenge: 395 Nl/min; Hornluftdruck: 5,2 bar), entsprechend einer Trockenschichtdicke von 4 bis 6 $\mu$m. Die Wasserbasislackschichten wurden nach dem ersten und zweiten Auftrag jeweils während 2 Minuten abgelüftet. Anschließend wurden sie während 10 Minuten bei 80°C getrocknet. Nach dem Abkühlen der Karosseriebleche auf 20°C wurden die Wasserbasislackschichten mit einem handelsüblichen Zweikomponentenklarlack der Firma BASF Coatings AG, entsprechend einer Trockenschichtdicke von 40 $\mu$m, überschichtet. Anschließend wurden die Wasserbasislackschichten und Klarlackschichten während 30 Minuten bei 130°C gemeinsam eingebrannt, wodurch die Mehrschichtlackierung 7 resultierte.

Mehrschichtlackierung 8:

Auf Karosserieblechen der Abmessung 30 mal 70 cm, die mit einer üblichen und bekannten, kathodisch abgeschiedenen und eingebrannten Elektrotauchlackierung beschichtet worden waren, wurde ein handelsüblicher Wasserfüller der Firma BASF Coatings AG appliziert, wonach die resultierenden Füllerschichten während 5 Minuten bei 20°C und einer relativen Luftfeuchtigkeit von 65% abgelüftet und in einem Umluftofen während 20 Minuten bei 140°C eingebrannt. Der Lösemittelbasislack V8 wurde auf die auf 40-50°C erwärmten gefüllerten Bleche in jeweils zwei Spritzgängen appliziert. Der erste Auftrag erfolgte pneumatisch (Abstand: 0,5 m; Ausflussmenge Lack: 300 Nl/min; Zerstäuberluftmenge: 320 Nl/min; Zerstäuberluftdruck: 4,8 bar, Hornluftmenge: 380 Nl/min; Hornluftdruck: 5,2 bar), entsprechend einer Trockenschichtdicke von 2 bis 3 $\mu$m. Anschließend wurde während 2 Minuten bei 20°C und einer relativen Luftfeuchtigkeit von 65% abgelüftet. Der zweite Auftrag erfolgte ebenfalls pneumatisch unter den vorstehend genannten Bedingungen, entsprechend einer Trockenschichtdicke von 2 bis 3 $\mu$m. Anschließend wurden die Wasserbasislackschichten während 10 Minuten bei 80°C. Nach dem Abkühlen der Karosseriebleche auf 20°C wurden die Wasserbasislackschichten mit einem handelsüblichen Zweikomponentenklarlack der Firma BASF Coatings AG entsprechend einer Trockenschichtdicke von 40 $\mu$m, überschichtet. Danach wurden die Füllerschichten, Wasserbasislackschichten und die Klarlackschichten während 30 Minuten bei 140°C gemeinsam eingebrannt. Nach dem Anschleifen der Klarlackierungen wurde ein handelsüblicher kratzfester Zweikomponentenklarlack der Firma PPG appliziert und während 30 Minuten bei 140°C eingebrannt, wodurch die Mehrschichtlackierung 8 resultierte.

**Vergleich der Mehrschichtlackierungen 1 bis 8:**

Die Mehrschichtlackierungen 1 bis 8 wurden mit Hilfe eines Spektralphotometers der Firma X-Rite (z. B. MA48 Multi-Angle Spectrophotometer) vermessen. Aus den anhand der beiden Mehrschichtlackierungen ermittelten Helligkeitswerten für die Betrachtungswinkel 15°, 45° und 110° kann der so genannte Flop-Index nach X-Rite nach der Formel

$$FL_{X\text{-Rite}} = 2{,}69\,(L^*_{15°} - L^*_{110°})^{1,11}/(L^*_{45°})^{0,86}$$

berechnet werden.

Bei der Mehrschichtlackierung 2 des wäßrigen Basislackes auf Basis von PVD-Alu-Pigmenten resultierte ein $FL_{X\text{-Rite}} = 26$, was nahezu auf dem Niveau der Mehrschichtlackierung 8 des Lösemittelbasislackes auf Basis von PVD-Alu-Pigmenten mit einem $FL_{X\text{-Rite}} = 27$ liegt. resultierte. Die Mehrschichtlackierungen 4 bis 6 ergeben bei vergleichbaren Pigment auf Bindemittel Gehalten, jedoch deutlich höheren Gesamt-Festkörpergehalten deutlich niedrigere Flop-Werte. Die Mehrschichtlackierung 7 des wäßrigen Basislackes auf Basis von Silberdollar-Alu-Pigmenten ergibt mit einem $FL_{X\text{-Rite}}$ von 11 mit Abstand den niedrigsten Wert.

Somit war bei der Mehrschichtlackierung 2 der metallische Flop sehr viel stärker ausgeprägt als bei den Mehrschichtlackierungen 3 bis 7 der Vergleichsversuche 3 bis 7. Gerade noch akzeptable Flop-Werte lieferte die Mehrschichtlackierung 1. Die Mehrschichtlackierung 2 zeichnet sich unter anderem durch einen deutlich reduzierten Gesamtfestkörper aus. Zusätzlich liegt der Gehalt an Pigment auf Bindemittel mit 7% genau in dem bevorzugten Bereich von 5% bis 9%.

Die Mehrschichtlackierungen 1 bis 8 wurden darüber hinaus unter diffusem Licht aus einem Abstand von 2 bis 3 m in Aufsicht (80°) und Schrägsicht (40°) hinsichtlich der Hell-Dunkel-Schattierungen (Wolken) visuell beurteilt und benotet (Note 1: keine Wolken sichtbar; bis Note 5: Wolken sehr deutlich sichtbar). Bei den Mehrschichtlackierungen 1 bis 3 resultierten in Aufsicht und Schrägsicht die Note 2. Dies bedeutete, dass keine signifikante Wolken sichtbar waren. Die Mehrschichtlackierungen 4 bis 6 lagen mit eine Note von 3 auf dem Niveau der Referenzlackierung 6. Die Mehrschichtlackierung 8 zeigte mit Note 5 ein deutlich schlechteres Wolkenbild.

Zur Simulation der Ringleitungsstabilität der Wasserbasislacke der Serien 1 bis 8 wurden jeweils 750 ml eines Wasserbasislacks in eine handelsübliche 1 Liter-Lackdose eingefüllt und während 20 Tagen bei Raumtemperatur mit einem Wendelrührer gerührt. Die Umfangsgeschwindigkeit lag bei 0,1 m/s. Auch nach 20 Tagen zeigten sich keine Ablagerungen von Partikeln an den Böden der Dosen. Die Wasserbasislacke waren daher hervorragend für die Herstellung von stippenfreien effektgebenden Mehrschichtlackierungen geeignet.

Die Tabelle 1 gibt einen Überblick über die erhaltenen Werte des Flop-Index nach X-Rite und des für die Bildung von Hell-Dunkel-Schattierungen (Wolken) wesentlichen Helligkeitswerts $L^*_{15°}$. Außerdem wurden Glanz und Haze (20°) nach DIN 67530, der Verlauf mit dem Messgerät: Firma Byk/Gardner - Wave scan plus (Long wave = LW; short wave = SW) und die durch den Schwitzwasserkonstantklima-Test (SKK) sowie nach 4000h WOM-Bewitterung hervorgerufene Farbtonabweichung mdE' bestimmt. Die Ergebnisse finden sich ebenfalls in der Tabelle 1.

**Tabelle 1: Wesentliche lacktechnische und anwendungstechnische Eigenschaften der Lacksysteme 1 bis 8 sowie der Mehrschichtlackierungen der Serien 1 bis 8**

| Lacksystem Mehrschichtlackierung | V1 | V2 | V3 | V4 | V5 | V6 | V7 | V8 |
|---|---|---|---|---|---|---|---|---|
| Basis | Wasser | Wasser | Wasser | Wasser | Wasser | Wasser | Wasser | LöMi |
| Alu-Type | PVD | PVD | PVD | PVD | PVD | PVD | Dollar | PVD |
| Festkörper [Gew.-%] | | < 11 | | | > 14 | | > 18 | < 11 |
| Pigment auf Bindemittel [Gew.-%] | 4% | 7% | 10% | 4% | 7% | 10% | 17% | 8% |
| Flop Index (X-Rite) | 24 | 26 | 22 | 20 | 20 | 19 | 11 | 27 |
| Wolken | Note 2 | Note 2 | Note 2 | Note 3 | Note 3 | Note 3 | Note 3 | Note 5 |
| mdE'(10d SKK) | 0,43 | 0,56 | 0,65 | 0,65 | 0,75 | 0,87 | 0,54 | 1,23 |
| mdE'(4000h WOM) | 1.12 | 1.32 | 1.23 | 1.87 | 1.98 | 1.87 | 0.98 | 3.56 |
| Haftung (4000h WOM) | i.O. | i.O. | i.O. | n.i.O. | n.i.O. | n.i.O. | i.O. | n.i.O. |
| Ringleitungsstabilität | i.O. | i.O. | i.O. | i.O. | i.O. | i.O. | i.O. | i.O. |
| Haze | 602 | 599 | 602 | 590 | 585 | 598 | 350 | 590 |
| Glanz | 104 | 103 | 102 | 103 | 102 | 101 | 88 | 102 |

(fortgesetzt)

| Lacksystem Mehrschichtlackierung | V1 | V2 | V3 | V4 | V5 | V6 | V7 | V8 |
|---|---|---|---|---|---|---|---|---|
| L-Wave | 2.5 | 2.8 | 3.2 | 3.2 | 3.1 | 3.2 | 7.8 | 3.7 |
| S-Wave | 17.4 | 17.2 | 17.8 | 16.8 | 17.4 | 17.8 | 22.3 | 16.9 |

Die in der Tabelle 1 zusammengestellten Ergebnisse untermauern, dass die erfindungsgemäßen Mehrschichtlackierungen aus V1 und V2 einen hervorragenden Flop-Effekt aufweisen. Hieraus resultierten Farb-Metallic-Effekte von einem sehr eleganten optischen Eindruck. Dies konnte besonders durch eine Erniedrigung des Gesamtfestkörpers auf unter 11 Gewichtsprozent sowie einer Erniedrigung des Pigmentgehaltes auf kleiner 0,6 Gewichtsprozent (V2) sowie eines Alugehaltes von 7 Gew.-% auf Gesamtbindemittelanteil (V2) erreicht werden.

Es wurden so gut wie keine Wolken beobachtet (Noten 2). Glanz und Haze sowie der Verlauf waren ebenfalls hervorragend.

Die erfindungsgemäßen Mehrschichtlackierungen sind bezüglich Farbton und Haftung nach Langzeitbewitterung stabil.

Somit erfüllen die erfindungsgemäße Mehrschichtlackierungen, wie das Vergleichs-Lacksystem V7 auf Wasserbasis mit Silberdollar-Alu-Pigmenten, alle technologischen Anforderungen, welche an einen Basislack für die Fahrzeugindustrie gestellt werden.

## Patentansprüche

1. Physikalisch, thermisch und physikalisch oder thermisch härtbare wässrige Beschichtungsmittel-Zusammensetzungen enthaltend

   A) mindestens ein Polyurethan, ausgewählt aus der Gruppe, bestehend aus physikalisch härtbaren, thermisch selbstvernetzenden und/oder thermisch fremdvernetzenden, gesättigten, ungesättigten und/oder mit olefinisch ungesättigten Verbindungen gepfropften, ionisch und/oder nichtionisch stabilisierten Polyurethanen, als Bindemittel und
   B) mindestens ein durch PVD-Verfahren (Physical Vapour Deposition) hergestelltes blättchenförmiges Metalleffektpigment,

   wobei der Gehalt an B), bezogen auf den Gesamtbindemittelgehalt der Beschichtungsmittel-Zusammensetzung weniger als 10 Gew.-% beträgt und der Gesamtbindemittelgehalt bezogen auf die Beschichtungsmittel-Zusammensetzung weniger als 12 Gew.-% beträgt.

2. Zusammensetzungen nach Anspruch 1, **dadurch gekennzeichnet, dass** das blättchenförmige Metalleffektpigment (B) ein Aluminiumeffektpigment ist.

3. Zusammensetzungen nach Anspruch 1 oder 2, **dadurch gekennzeichnet, dass** das blättchenförmige Metalleffektpigment (B) eine Dicke von 20 bis 80 nm hat.

4. Zusammensetzungen nach einem der Ansprüche 1 bis 3, **dadurch gekennzeichnet, dass** das blättchenförmige Metalleffektpigment (B) eine maximale Teilchengröße von 20 bis 50 μm hat.

5. Zusammensetzungen nach einem der Ansprüche 1 bis 4, **dadurch gekennzeichnet, dass** das blättchenförmige Metalleffektpigment (B) durch Aufdampfen des Metalls im Hochvakuum auf ein temporäres Substrat und Entfernen der resultierenden Metallschicht (B') vom temporären Substrat hergestellt wurde.

6. Zusammensetzungen nach Anspruch 5, **dadurch gekennzeichnet, dass** das temporäre Substrat eine Kunststofffolie ist.

7. Zusammensetzungen nach Anspruch 5 oder 6, **dadurch gekennzeichnet, dass** das temporäre Substrat eine Antihaftschicht oder Release-Schicht umfasst.

8. Zusammensetzungen nach einem der Ansprüche 5 bis 7, **dadurch gekennzeichnet, dass** die Metallschicht (B') durch Strippen vom temporären Substrat entfernt wurde, wonach die resultierenden Metallblättchen (B") geschert wurden, wodurch das blättchenförmige Metalleffektpigment (B) resultierte.

9. Zusammensetzungen nach einem oder mehreren der Ansprüche 1 bis 8, **dadurch gekennzeichnet, dass** der Gesamtbindemittelanteil in der Zusammensetzung weniger als 10 Gew.-% beträgt.

10. Zusammensetzungen nach einem oder mehreren der Ansprüche 1 bis 9, **dadurch gekennzeichnet, dass** der Gehalt an B), bezogen auf den Gesamtbindemittelgehalt der Zusammensetzung 4 bis 9 Gew.-% beträgt.

11. Zusammensetzungen nach einem oder mehreren der Ansprüche 1 bis 10, **dadurch gekennzeichnet, dass** der Gehalt an A) bezogen auf den Gesamtbindemittelgehalt mindestens 25 Gew.-% beträgt.

12. Zusammensetzungen nach einem oder mehreren der Ansprüche 1 bis 11, **dadurch gekennzeichnet, dass** der Gehalt an B) bezogen auf das Gesamtgewicht der Zusammensetzung 0,3 bis 0,9 Gew.-% beträgt.

13. Zusammensetzungen nach einem oder mehreren der Ansprüche 1 bis 12, **dadurch gekennzeichnet, dass** der Gesamtfestkörpergehalt der Zusammensetzung 7 bis 14 Gew.-% beträgt.

14. Zusammensetzungen nach einem oder mehreren der Ansprüche 1 bis 13, **dadurch gekennzeichnet, dass** der Lösemittelgehalt der Zusammensetzung maximal 15 Gew.-% beträgt.

15. Verfahren zur Herstellung von physikalisch, thermisch und physikalisch und thermisch härtbaren, Metalleffektpigmente enthaltenden, wässrigen Zusammensetzungen gemäß einem der Ansprüche 1 bis 8, **dadurch gekennzeichnet, dass** man mindestens ein Polyurethan (A) und mindestens ein blättchenförmiges Metalleffektpigment (B) in einem wässrigen Medium dispergiert und die resultierende Mischung homogenisiert.

16. Verwendung der physikalisch, thermisch und physikalisch und thermisch härtbaren, Metalleffektpigmente enthaltenden, wässrigen Zusammensetzungen gemäß einem der Ansprüche 1 bis 14 und der nach dem Verfahren gemäß Anspruch 15 hergestellten physikalisch, thermisch und physikalisch und thermisch härtbaren, Metalleffektpigmente enthaltenden, wässrigen Zusammensetzungen als Beschichtungsstoffe und zur Herstellung von Beschichtungen.

17. Verwendung nach Anspruch 16, **dadurch gekennzeichnet, dass** die Beschichtungsstoffe der Herstellung einschichtiger und mehrschichtiger effektgebender oder farb- und effektgebender Beschichtungen dienen.

18. Verwendung nach Anspruch 17, **dadurch gekennzeichnet, dass** die Beschichtungsstoffe Wasserbasislacke sind, die der Herstellung effektgebender oder farb- und effektgebender Basislackierungen von Mehrschichtlackierungen dienen.

19. Verwendung nach Anspruch 18, **dadurch gekennzeichnet, dass** die Mehrschichtlackierungen durch Nass-in-nass-Verfahren hergestellt werden, bei denen man:

(1) mindestens einen Wasserbasislack auf ein grundiertes oder ungrundiertes Substrat appliziert, wodurch mindestens eine Wasserbasislackschicht (1) resultiert,
(2) mindestens einen Klarlack auf die Wasserbasislackschicht (1) appliziert, wodurch mindestens eine Klarlackschicht (2) resultiert, und
(3) zumindest die Wasserbasislackschicht(en) (1) und die Klarlackschicht(en) (2) gemeinsam härtet, wodurch die Basislackierung (1) und die Klarlackierung (2) resultieren.

20. Verwendung nach Anspruch 19, wobei
das Substrat ein mit zwei Primerschichten grundiertes Substrat ist,
der Primer in einem elektrostatischen Lackierverfahren in zwei Beschichtungsschritten aufgebracht wird und die Trockenschichtdicke jeder der beiden Primerschichten 10 bis 25 $\mu$m beträgt;
die Wasserbasislackschicht (1) in zwei Beschichtungsschritten aufgebracht wird und die Trockenschichtdicke jeder der beiden Wasserbasislackschichten 2 bis 6 $\mu$m beträgt; und
die Klarlackschicht (2) in einem elektrostatischen Lackierverfahren in einem Beschichtungsschritt in einer Trockenschichtdicke von 30 bis 45 $\mu$m aufgebracht wird.

21. Mehrschichtlackierung erhältlich durch das Nass-in-nass-Verfahren nach einem der Ansprüche 19 oder 20.

**Claims**

1.  Physically, thermally and physically, or thermally curable aqueous coating compositions comprising

    A) at least one polyurethane selected from the group consisting of physically curable, thermally self-crosslinking and/or thermally externally crosslinking, ionically and/or nonionically stabilized polyurethanes, which are saturated, unsaturated and/or grafted with olefinically unsaturated compounds, as binder and
    B) at least one leaflet-shaped metallic pigment produced by PVD (Physical Vapor Deposition) methods,

    the amount of B), based on the total binder content of the coating composition, being less than 10% by weight, and the total binder content, based on the coating composition, being less than 12% by weight.

2.  Compositions according to Claim 1, **characterized in that** the leaflet-shaped metallic pigment (B) is an aluminum effect pigment.

3.  Compositions according to Claim 1 or 2, **characterized in that** the leaflet-shaped metallic pigment (B) has a thickness of 20 to 80 nm.

4.  Compositions according to any one of Claims 1 to 3, **characterized in that** the leaflet-shaped metallic pigment (B) has a maximum particle size of 20 to 50 μm.

5.  Compositions according to any one of Claims 1 to 4, **characterized in that** the leaflet-shaped metallic pigment (B) has been produced by vapor deposition of the metal under a high vacuum onto a temporary substrate and removal of the resulting metal layer (B') from the temporary substrate.

6.  Compositions according to Claim 5, **characterized in that** the temporary substrate is a polymeric film.

7.  Compositions according to Claim 5 or 6, **characterized in that** the temporary substrate comprises an antistick layer or release layer.

8.  Compositions according to any one of Claims 5 to 7, **characterized in that** the metal layer (B') has been removed from the temporary substrate by stripping, after which the resulting metal leaflets (B") have been sheared to give the leaflet-shaped metallic pigment (B).

9.  Compositions according to one or more of Claims 1 to 8, **characterized in that** the total binder fraction in the composition is less than 10% by weight.

10. Compositions according to one or more of Claims 1 to 9, **characterized in that** the amount of B), based on the total binder content of the composition, is 4% to 9% by weight.

11. Compositions according to one or more of Claims 1 to 10, **characterized in that** the amount of A), based on the total binder content, is at least 25% by weight.

12. Compositions according to one or more of Claims 1 to 11, **characterized in that** the amount of B), based on the total weight of the composition, is 0.3 to 0.9% by weight.

13. Compositions according to one or more of Claims 1 to 12, **characterized in that** the total solids content of the composition is 7% to 14% by weight.

14. Compositions according to one or more of Claims 1 to 13, **characterized in that** the solvent content of the composition is not more than 15% by weight.

15. Process for producing aqueous compositions comprising metallic pigments which are physically, thermally and physically, or thermally curable, according to any one of Claims 1 to 8, **characterized in that** it comprises dispersing at least one
    polyurethane (A) and at least one leaflet-shaped metallic pigment (B) in an aqueous medium and homogenizing the resulting mixture.

**16.** Use of the aqueous compositions comprising metallic pigments which are physically, thermally and physically, or thermally curable, according to any one of Claims 1 to 14, or of the aqueous compositions comprising metallic pigments which are curable physically, thermally and physically, or thermally and have been produced by the process according to Claim 15 as coating materials or for producing coatings.

**17.** Use according to Claim 16, **characterized in that** the coating materials serve for producing single-coat and multicoat effect coatings or color and effect coatings.

**18.** Use according to Claim 17, **characterized in that** the coating materials are aqueous basecoat materials which serve for producing effect basecoats or color and effect basecoats of multicoat paint systems.

**19.** Use according to Claim 18, **characterized in that** the multicoat paint systems are produced by wet-on-wet methods which involve:

(1) applying at least one aqueous basecoat material to a primed or unprimed substrate to give at least one aqueous basecoat film (1),
(2) applying at least one clearcoat material to the aqueous basecoat film (1) to give at least one clearcoat film (2), and
(3) jointly curing at least the aqueous basecoat film(s) (1) and the clearcoat film(s) (2) to give the basecoat (1) and the clearcoat (2).

**20.** Use according to Claim 19, wherein
the substrate is a substrate primed with two primer coats;
the primer is applied in two coating steps in an electrostatic painting process and the dry film thickness of each of the two primer coats is 10 to 25 $\mu$m;
the aqueous basecoat film (1) is applied in two coating steps and the dry film thickness of each of the two aqueous basecoat films is 2 to 6 $\mu$m; and
the clearcoat film (2) is applied in one coating step in an electrostatic coating process, in a dry film thickness of 30 to 45 $\mu$m.

**21.** Multicoat paint system obtainable by the wet-on-wet method of either of Claims 19 and 20.

**Revendications**

**1.** Compositions aqueuses de produits de revêtement durcissables physiquement, thermiquement et physiquement ou thermiquement, contenant

A) au moins un polyuréthanne, choisi dans le groupe constitué par des polyuréthannes durcissables physiquement, autoréticulables thermiquement et/ou réticulables thermiquement à l'aide d'un agent de réticulation, saturés, insaturés et/ou greffés avec des composés à insaturation oléfinique, stabilisés par voie ionique et/ou non ionique, en tant que liant et
B) au moins un pigment lamellaire à effet métallique, produit par un procédé PVD (Physical Vapour Deposition),

la teneur en B), par rapport à la teneur totale en liant de la composition de produit de revêtement, étant inférieure à 10 % en poids et la teneur totale en liant par rapport à la composition de produit de revêtement étant inférieure à 12 % en poids.

**2.** Compositions selon la revendication 1, **caractérisées en ce que** le pigment lamellaire à effet métallique (B) est un pigment à effet à base d'aluminium.

**3.** Compositions selon la revendication 1 ou 2, **caractérisées en ce que** le pigment lamellaire à effet métallique (B) a une épaisseur de 20 à 80 nm.

**4.** Compositions selon l'une quelconque des revendications 1 à 3, **caractérisées en ce que** le pigment lamellaire à effet métallique (B) a une taille maximale de particules de 20 à 50 $\mu$m.

**5.** Compositions selon l'une quelconque des revendications 1 à 4, **caractérisées en ce que** le pigment lamellaire à effet métallique (B) a été produit par dépôt par vaporisation du métal sous vide poussé sur un support temporaire et détachement de la couche métallique (B') résultante du support temporaire.

6. Compositions selon la revendication 5, **caractérisées en ce que** le support temporaire est un film en matière plastique.

7. Compositions selon la revendication 5 ou 6, **caractérisées en ce que** le support temporaire comprend une couche antiadhésive ou couche release.

8. Compositions selon l'une quelconque des revendications 5 à 7, **caractérisées en ce que** la couche métallique (B') a été détachée du support temporaire par pelage, à la suite de quoi les lamelles métalliques (B") résultantes ont été cisaillées, de sorte qu'il en a résulté le pigment lamellaire à effet métallique (B).

9. Compositions selon une ou plusieurs des revendications 1 à 8, **caractérisées en ce que** la proportion totale de liant dans la composition est inférieure à 10 % en poids.

10. Compositions selon une ou plusieurs des revendications 1 à 9, **caractérisées en ce que** la teneur en B), par rapport à la teneur totale en liant de la composition, vaut de 4 à 9 % en poids.

11. Compositions selon une ou plusieurs des revendications 1 à 10, **caractérisées en ce que** la teneur en A), par rapport à la teneur totale en liant, est au moins de 25 % en poids.

12. Compositions selon une ou plusieurs des revendications 1 à 11, **caractérisées en ce que** la teneur en B), par rapport au poids total de la composition, vaut de 0,3 à 0,9 % en poids.

13. Compositions selon une ou plusieurs des revendications 1 à 12, **caractérisées en ce que** la teneur totale en solides de la composition vaut de 7 à 14 % en poids.

14. Compositions selon une ou plusieurs des revendications 1 à 13, **caractérisées en ce que** la teneur en solvant de la composition est au maximum de 15 % en poids.

15. Procédé pour la préparation de compositions aqueuses contenant des pigments à effet métallique, durcissables physiquement, thermiquement et physiquement et thermiquement, selon l'une quelconque des revendications 1 à 8, **caractérisé en ce qu'**on disperse dans un milieu aqueux au moins un polyuréthanne (A) et au moins un pigment lamellaire à effet métallique (B) et on homogénéise le mélange résultant.

16. Utilisation des compositions aqueuses contenant des pigments à effet métallique, durcissables physiquement, thermiquement et physiquement et thermiquement, selon l'une quelconque des revendications 1 à 14 et des compositions aqueuses contenant des pigments à effet métallique, durcissables physiquement, thermiquement et physiquement et thermiquement, préparées conformément au procédé selon la revendication 15, en tant que matières de revêtement et pour la production de revêtements.

17. Utilisation selon la revendication 16, **caractérisée en ce que** les matières de revêtement servent à la production de revêtements monocouche et multicouche, à effet ou colorants et à effet.

18. Utilisation selon la revendication 17, **caractérisée en ce que** les matières de revêtement sont des peintures de fond à l'eau, qui servent à la production de revêtements de peinture de fond à effet ou colorants et à effet de revêtements de peinture multicouche.

19. Utilisation selon la revendication 18, **caractérisée en ce que** les revêtements de peinture multicouche sont produits par des procédés humide-sur-humide, dans lesquels :

   (1) on applique au moins une peinture de fond à l'eau sur un subjectile muni ou non d'un primaire, de sorte qu'il en résulte au moins une couche de peinture de fond à l'eau (1),
   (2) on applique au moins un vernis sur la couche de peinture de fond à l'eau (1), de sorte qu'il en résulte au moins une couche de vernis (2), et
   (3) on fait durcir ensemble au moins la/les couche(s) de peinture de fond à l'eau (1) et la/les couche(s) de vernis (2), de sorte qu'il en résulte le revêtement de peinture de fond (1) et le revêtement de vernis (2).

**20.** Utilisation selon la revendication 19, dans laquelle
le subjectile est un subjectile muni d'un primaire, comportant deux couches de primaire,
le primaire est appliqué en deux étapes d'enduction dans un procédé de peinturage électrostatique et l'épaisseur de couche sèche de chacune des deux couches de primaire vaut de 10 à 25 $\mu$m ;
la couche de peinture de fond à l'eau (1) est appliquée en deux étapes d'enduction et l'épaisseur de couche sèche de chacune des deux couches de peinture de fond à l'eau vaut de 2 à 6 $\mu$m ; et
la couche de vernis (2) est appliquée en une épaisseur de couche sèche de 30 à 45 $\mu$m dans un procédé de peinturage électrostatique, en une étape d'enduction.

**21.** Revêtement de peinture multicouche pouvant être obtenu par le procédé humide-sur-humide selon l'une quelconque des revendications 19 et 20.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0826745 A2
- EP 1591492 A1
- WO 2006017197 A1
- DE 10010416 A1
- DE 4009858 A1
- DE 4437535 A1

- DE 19914896 A1
- DE 10043405 C1
- DE 19948004 A1
- DE 10053890 A1
- DE 10223652 A1
- DE 10240972 A1

**In der Beschreibung aufgeführte Nicht-Patentliteratur**

- Römpp Online. Georg Thieme Verlag, 2004